# EUROPEAN PATENT APPLICATION

(11) **EP 4 279 926 A1**
(43) Date of publication of application: **22.11.2023**
(21) Application number: 21919642.5
(22) Date of filing: 13.12.2021
(51) Int. Cl.: G01N 35/00, G01N 21/01, G01N 21/59

(54) **AUTOMATIC ANALYSIS DEVICE AND AUTOMATIC ANALYSIS METHOD**

(30) Priority: 13.01.2021 JP 2021003284
(71) Applicant: HITACHI HIGH-TECH CORPORATION, Tokyo 105-6409 (JP)
(72) Inventor: KARO Hikaru, Tokyo 105-6409 (JP); NISHIGAKI Kenichi, Tokyo 105-6409 (JP)
(74) Representative: Strehl Schübel-Hopf & Partner
(86) International application number: PCT/JP2021/045749
(87) International publication number: WO 2022/153753

(57) **Abstract**

In an automatic analyzer, an influence due to a disturbance component on a measurement result can be appropriately prevented. An automatic analyzer 1 includes: a first light source 102 configured to emit light toward a sample 44; a drive circuit 101 configured to supply a first drive current I3 whose frequency changes from f1 to f2 intermittently or continuously to the first light source 102; a light receiver 113 configured to output a light detection signal IR based on the light transmitted through the sample 44; and a signal processing circuit 111 configured to demodulate the light detection signal IR in accordance with the frequency f1 to f2 of the first drive current I3 and output a measurement signal VL based on a demodulation result.

## Description

### Technical Field

The present invention relates to an automatic analyzer and an automatic analysis method.

### Background art

As a background art of the present technical field, in the patent literature 1, there is described that light from two light sources is emitted to a blood serum, the two light sources emitting light having different wavelength and modulating frequency, and a light absorbance amount by the blood serum of each wavelength is calculated on the basis of intensity of the transmitted light having transmitted the blood serum. Also, in the patent literature 2, there is described that each of plural light sources is modulated with different modulation frequencies and only the desired signal component is detected by frequency separation.

### Citation List

### Patent Literature

Patent Literature 1: Japanese Unexamined Patent Application Publication No. 2008-026036
Patent Literature 2: Japanese Unexamined Patent Application Publication No. 2006-329920

### Summary of Invention

### Technical Problem

In the meantime, in the arts described above, there is a desire of properly suppressing an influence by the disturbance component for the measurement result.

Therefore, the object of the present invention is to provide an automatic analyzer and an automatic analysis method capable of properly suppressing an influence by the disturbance component for the measurement result.

### Solution to Problem

In order to solve the problem described above, an automatic analyzer of the present invention is characterized to include a first light source configured to emit light toward a sample, a drive circuit configured to supply a first drive current whose frequency changes intermittently or continuously to the first light source, a light receiver configured to output a light detection signal based on light transmitted through the sample, and a signal processing circuit configured to demodulate the light detection signal in accordance with the frequency of the first drive current and output a measurement signal based on a demodulation result.

### Advantageous Effects of Invention

According to the present invention, an influence by the disturbance component for the measurement result can be properly suppressed.

### Brief Description of Drawings

[FIG. 1] FIG. 1 is a block diagram of an automatic analyzer according to a first embodiment.
[FIG. 2] FIG. 2 is a block diagram of a main part in FIG. 1.
[FIG. 3] FIG. 3 is an example of a waveform diagram of each part in FIG. 2.
[FIG. 4] FIG. 4 is an example of a waveform diagram of each part in a first comparative example.
[FIG. 5] FIG. 5 is a block diagram of a main part of an automatic analyzer according to a second embodiment.
[FIG. 6] FIG. 6 is a diagram showing a frequency spectrum appearing in a photocurrent signal according to the second embodiment.
[FIG. 7] FIG. 7 is a diagram showing a frequency spectrum appearing in a photocurrent signal according to a second comparative example.
[FIG. 8] FIG. 8 is a diagram showing a frequency spectrum appearing in a photocurrent signal according to a third comparative example.

### Description of Embodiments

### [Premises of Embodiments]

First, such a case is assumed that a light source is driven by a current having a fixed frequency, and emitted light is made to enter a sample. In this case, if a disturbance having a frequency which is the same as the drive frequency is mixed in, when the drive frequency component is to be separated from the measurement result, it is probable that the disturbance component cannot be separated from the transmitted light component which is the analysis object and an error may be caused in the measurement result. Also, as the patent literature 2 described above, when plural light sources are driven with different frequencies, a signal corresponding to the drive frequency difference becomes a beat signal and may possibly superimpose the measurement value as a noise. Further, such problems may occur that a signal generator for a different frequency and frequency separation unit may be required in a step for processing the light receiving signal, the configuration may become complicated, and the cost may be increased.

Therefore, an embodiment described below is to reduce the influence by the disturbance component when a disturbance having a frequency which is the same as the drive frequency is mixed into the output of the light receiver. Also, an embodiment is to reduce the noise deriving from a beat phenomenon without complicating the circuit configuration in driving plural light sources.

### [First Embodiment]

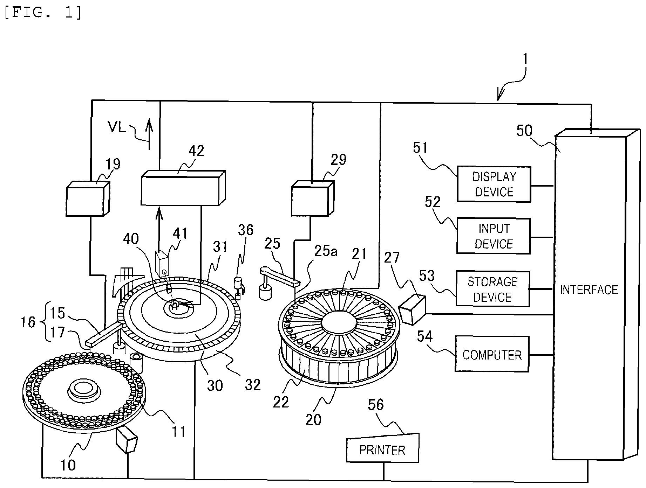

FIG. 1 is a block diagram of an automatic analyzer 1 according to the first embodiment.

In FIG. 1, the automatic analyzer 1 mainly includes a sample disk 10, a reagent disk 20, a reaction disk (incubator) 30, a light transmission unit 40, a light receiver 41, a light signal controller 42, and a computer 54.

The reaction disk 30 is formed into a generally disk shape, and plural (approximately 100 to 200 for example) reaction containers 31 are arranged at the peripheral part of the upper surface. The reaction container 31 is obtained by forming a light transmitting material into a generally rectangular parallelepiped box shape. The reaction container 31 is kept at a predetermined temperature (37°C for example) by a thermostatic chamber 32.

On the sample disk 10, a number of sample containers 11 storing a biological sample such as blood and urine are mounted along the peripheral direction in two lines in the illustrated case. Also, a sample dispensing mechanism 16 is arranged in the vicinity of the sample disk 10. The sample dispensing mechanism 16 includes a movable arm 15 and a pipet nozzle 17 that is attached to the movable arm 15.

By the configuration described above, with respect to the sample dispensing mechanism 16, in dispensing the sample, the pipet nozzle 17 moves to a dispensing position by the movable arm 15, aspirates the sample of a determined amount from the sample container 11 positioned at an aspiration position of the sample disk 10, and discharges the sample into the reaction container 31 located at a discharging position on the reaction disk 30.

On the reagent disk 20, a reagent refrigerating chamber 22 formed into a generally cylindrical shape is arranged. Inside the reagent refrigerating chamber 22, plural reagent bottles 21 are arranged along the peripheral direction of the reagent disk 20. On each of the reagent bottles 21, a label (not illustrated) is pasted which displays reagent identification information such as a barcode for example.

In each of the reagent bottles 21, a reagent solution is stored which corresponds to an analysis item that can be analyzed by the automatic analyzer 1. Also, a barcode reading device 27 is arranged adjacent to the reagent disk 20. The barcode reading device 27 reads a barcode displayed on the outer wall of each of the reagent bottles 21 at the time of registration of the reagent. Reagent information having been read is registered in a storage device 53 along with the position on the reagent disk 20.

Also, in the vicinity of the reagent disk 20, there is arranged a reagent dispensing mechanism 25 that forms a mechanism generally similar to the sample dispensing mechanism 16. At the time of dispensing the reagent, in the reagent disk 20, the reagent bottle 21 corresponding to the inspection item is arranged in the vicinity of the reagent dispensing mechanism 25. Further, in the reaction disk 30, the corresponding reaction container 31 is arranged in the vicinity of the reagent dispensing mechanism 25. Also, the reagent dispensing mechanism 25 aspirates the reagent solution from the reagent bottle 21 by a pipet nozzle 25a, and discharges the reagent solution to the reaction container 31.

At a position surrounded by the reaction disk 30, the reagent disk 20, and the reagent dispensing mechanism 25, a stirring mechanism 36 is arranged. The reaction solution (sample) of the sample and the reagent stored inside the reaction container 31 is stirred by the stirring mechanism 36, and the reaction is promoted. The light transmission unit 40 is arranged in the vicinity of the center part of the reaction disk 30, and the light receiver 41 is arranged on the outer peripheral side of the reaction disk 30. A row of the reaction containers 31 having finished stirring performs rotational movement so as to pass a light measurement position that is sandwiched by the light transmission unit 40 and the light receiver 41.

The reaction disk 30 is driven intermittently at every rotation angle of 45° for example, and effects one turn in 9 sec. To the reaction solution of the sample and the reagent in the inside of the each reaction container 31, light is emitted by the light transmission unit 40 every time the reaction solution intersects the light measurement position by the rotating motion of the reaction disk 30. The period over which one reaction container 31 intersects the light measurement position is approximately 10 to 30 milliseconds for example. The transmitted light having attenuated according to the light absorbance of the reaction solution enters the light receiver 41 that is arranged opposingly. The light receiver 41 separates the light having been received for each wavelength, and supplies a photocurrent signal corresponding to intensity of each wavelength to the light signal controller 42.

Next, the control system and the signal processing system in the automatic analyzer 1 of FIG. 1 will be explained briefly. The computer 54 is connected to a sample dispensing control unit 19, a reagent dispensing control unit 29, and the light signal controller 42 through an interface 50. The computer 54 sends a command to the sample dispensing control unit 19, and controls the dispensing operation for the sample. Also, the computer 54 sends a command to the reagent dispensing control unit 29, and controls the dispensing operation for the reagent.

The light signal controller 42 creates a measurement signal VL based on a photocurrent signal of each wavelength measured by the light receiver 41. Also, the light signal controller 42 converts the measurement signal VL into numerical value data, and supplies the numerical value data to the computer 54 through the interface 50. To the interface 50, there are connected a printer 56 for printing, the storage device 53 that is a storage device, an external output medium (not illustrated), an input device 52 for inputting an operation command and the like, and a display device 51 for displaying a screen.

The storage device 53 includes a hard disk memory or an external memory and the like for example (not illustrated). In the storage device 53, there are stored information such as the password of each operator, the display level of each screen, the analysis parameter, the analysis item request content, the calibration result, and the analysis result.

Next, an analysis operation for the sample in the automatic analyzer 1 of FIG. 1 will be explained. The analysis parameter on an item that can be analyzed by the automatic analyzer 1 is inputted beforehand through the input device 52 such as a keyboard, and is stored in the storage device 53. Using an operation function screen of the display device 51, the operator selects the inspection item requested for each sample.

At this time, information such as the patient ID is also inputted from the input device 52. In order to analyze the inspection item instructed for each sample, the pipet nozzle 17 of the sample dispensing mechanism 16 dispenses the sample of a predetermined amount from the sample container 11 to the reaction container 31 according to the analysis parameter.

The reaction container 31 to which the sample has been dispensed is transferred by rotation of the reaction disk 30, and is stopped at the reagent receiving position in the vicinity of the reagent dispensing mechanism 25. The pipet nozzle 25a of the reagent dispensing mechanism 25 dispenses the reagent solution of a predetermined amount to the reaction container 31 according to the analysis parameter of the pertinent inspection item. Also, with respect to the dispensing order of the sample and the reagent, it is also possible that the regent is earlier than the sample contrary to this example.

Thereafter, stirring of the sample and the reagent is performed by the stirring mechanism 36, and both are mixed. When this reaction container 31 intersects the light measurement position, the transmitted light of the reaction solution is measured by the light receiver 41. The transmitted light having been measured is converted to numerical value data corresponding to the light amount by the signal processing circuit, and is taken into the computer 54 through the interface 50.

Using this converted numerical value, according to the analysis method designated for each inspection item, the concentration data are calculated based on the standard curve having been measured beforehand. The component concentration data as the analysis item of each inspection item are outputted to the printer 56 and the screen of the display device 51. Before the measurement operation described above is executed, the operator executes setting of various parameters and registration of the sample required for analysis measurement through the operation screen of the display device 51. Also, the operator confirms the analysis result after the measurement by the operation screen on the display device 51.

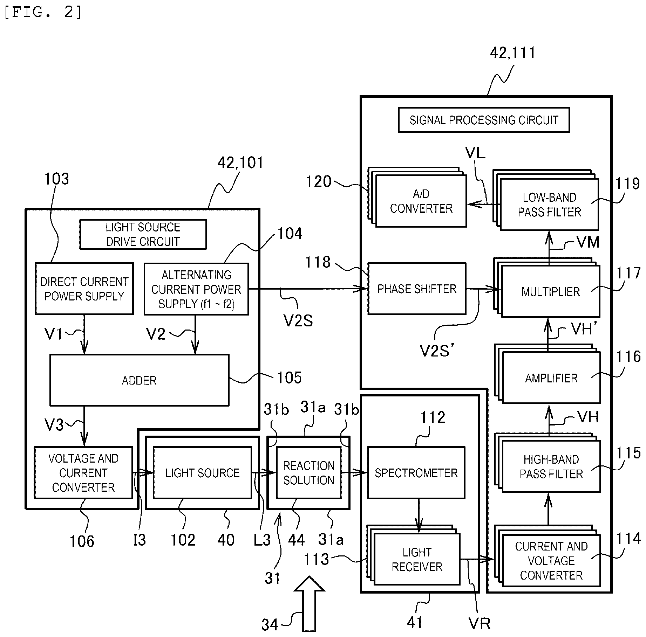

FIG. 2 is a block diagram of a main part in FIG. 1. In particular, FIG. 2 shows the detail of the light transmission unit 40, the light receiver 41, and the light signal controller 42.

In FIG. 2, the light signal controller 42 includes a light source drive circuit 101 (drive circuit) and a signal processing circuit 111. Also, the light transmission unit 40 includes a light source 102 (the first light source). With respect to the light source 102, one with excellent frequency response for the drive current is preferable, and an LED and the like for example is suitable.

The reaction container 31 includes: a pair of wall surfaces 31a which are parallel to an irradiation light L3 from the light transmission unit 40; and a pair of wall surfaces 31b which are perpendicular to the irradiation light L3. An open arrow 34 expresses the transport direction of the reaction container 31 by the reaction disk 30. Also, to the reaction container 31, a reaction solution 44 (sample) obtained by mixing the sample and the reagent is poured in. Further, the light receiver 41 includes: a spectrometer 112 which separates the light having been received into each wavelength; and a light receiver 113 which outputs a photocurrent signal corresponding to the intensity of each wavelength.

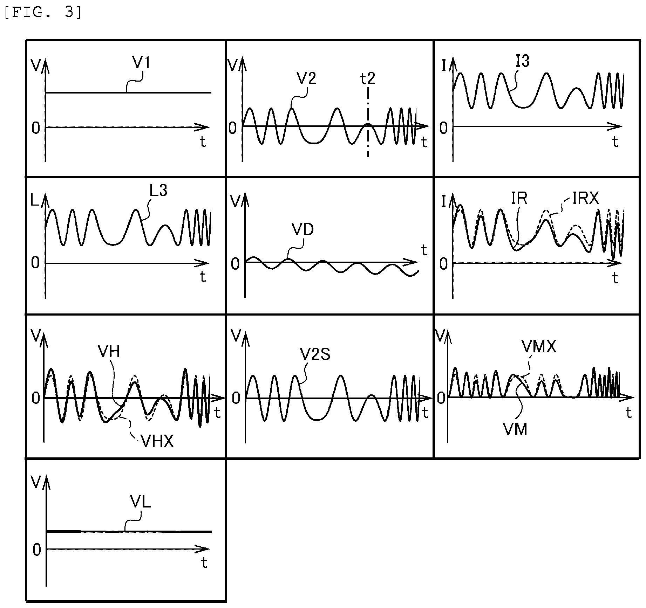

FIG. 3 is an example of a waveform diagram of each part in FIG. 2.

In FIG. 3, the horizontal axis of each graph expresses the clock time t. Also, V, I, and L of the vertical axis express the voltage, current, and intensity of the light, respectively. Each waveform in FIG. 3 will be described below along with the content of FIG. 2 described below.

The light source drive circuit 101 includes: a direct current power supply 103 (direct current component control unit); an alternating current power supply 104 (alternating current component control unit); an adder 105; and a voltage and current converter 106. The direct current power supply 103 outputs direct current voltage V1, and the alternating current power supply 104 outputs alternating current voltage V2. In the first tier of FIG. 3, there are shown the waveform examples of the direct current voltage V1, the alternating current voltage V2, and the drive current I3 supplied to the light source 102. Here, the frequency of the alternating current voltage V2 changes continuously or intermittently by time division within the range of f1 (lowest frequency) to f2 (wherein f1<f2).

Also, the frequencies f1, f2 are preferable to be within the range of 1 kHz to 1 MHz for example, and the range of 10 kHz to 100 kHz is more preferable. In the example of the alternating current voltage V2 illustrated in FIG. 3, the amplitude is small in the vicinity of a clock time t2. The reason is that the amplitude reduces accompanied with switching of the frequency of the alternating current voltage V2.

In FIG. 2, the adder 105 synthesizes the direct current voltage V1 and the alternating current voltage V2, and outputs pulsating current voltage V3 that is the result of it. The voltage and current converter 106 supplies the drive current I3 (the first drive current) which is a pulsating current having a magnitude being proportional to the pulsating current voltage V3 to the light source 102. As a result, the light source 102 generates an irradiation light L3 in which the intensity and frequency change temporally.

That is to say, the direct current power supply 103 has a function of controlling the direct current component of the drive current I3 by the direct current voltage V1, and the alternating current power supply 104 has a function of controlling the alternating current component of the drive current I3 by the alternating current voltage V2. When the reaction solution 44 that is the measurement object intersects the light measurement position (not illustrated), irradiation light L3 is emitted to the pertinent reaction solution 44. Waveform examples of the drive current I3 and the irradiation light L3 are illustrated in the first tier and the second tier of FIG. 3. In the example illustrated in the drawing, the waveform of the drive current I3 is generally the same as the waveform of the irradiation light L3.

Also, in the second tier of FIG. 3, a waveform example of a disturbance component VD is illustrated.

In the illustrated example, although the disturbance component VD is illustrated by the dimension of the voltage (V), the disturbance component VD occurs in various dimensions, and possibly imparts an influence on the signal of each part of the automatic analyzer 1. For example, interference caused by electrical joint to the substrate pattern and wiring by the commercial power supply, interference emitted from another device and mixed in to the automatic analyzer, interference of the pulse signal for driving a motor within the automatic analyzer, interference of the temperature control signal of the reagent refrigerating chamber and the thermostatic chamber, interference caused by that electric inductance or the capacitance coupling state changes periodically while being accompanied with an operation of each mechanism, change of the light amount possibly occurring while being accompanied with vibration when the disk turns, and so on can be cited as the examples of the disturbance component VD.

Also, in FIG. 2, the signal processing circuit 111 includes a current and voltage converter 114, a high-band pass filter 115, an amplifier 116, a multiplier 117, a phase shifter 118, a low-band pass filter 119, and an A/D converter 120.

The spectrometer 112 disperses the light having passed through the reaction solution 44 into components of plural wavelength bands. The light receiver 113 converts the light of each wavelength band having been dispersed into a photocurrent signal IR (light detection signal). A waveform example of the photocurrent signal IR is illustrated in the second tier of FIG. 3. Further, although the light receiver 113 outputs the photocurrent signals IR by the number of the wavelength bands, in FIG. 3, with respect to the photocurrent signal IR and the signal generated in a later stage, one corresponding to one wavelength band is illustrated. Also, superposing the waveform of the photocurrent signal IR, a waveform of an ideal photocurrent signal IRX is illustrated by a broken line. Here the ideal photocurrent signal IRX is an imaginary photocurrent signal IR assuming that there is not the disturbance component VD at all. In other words, the photocurrent signal IR that is actually observable is the ideal photocurrent signal IRX superposed by the disturbance component VD.

Returning to FIG. 2, the current and voltage converter 114 converts the photocurrent signal IR to a voltage signal. The high-band pass filter 115 removes components lower than a predetermined cutoff frequency ft out of the voltage signal, and outputs the result as an alternating current signal VH. Here, the cutoff frequency ft is set to a frequency lower than the lowest frequency of the drive current I3 (namely the frequency f1).

In the third tier of FIG. 3, a waveform example of the alternating current signal VH is illustrated. Also, superposing it, the waveform of an ideal alternating current signal VHX of a case of assuming that there is not the disturbance component VD at all is illustrated by a broken line. In this way, the component corresponding to the direct current component of the drive current I3, offset appearing in the photocurrent signal IR, offset occurring in the current and voltage converter 114, and so on are removed by the high-band pass filter 115.

Returning to FIG. 2, the amplifier 116 amplifies the alternating current signal VH, and outputs the result as an alternating current signal VH'. Also, the light source drive circuit 101 supplies a synchronous signal V2S to the signal processing circuit 111. A waveform example of the synchronous signal V2S is illustrated in the third tier of FIG. 3. In the illustrated example, the synchronous signal V2S has a waveform which is the same as the waveform of the alternating current voltage V2.

Returning to FIG. 2, the phase shifter 118 adjusts the phase of the synchronous signal V2S so as to coincide with the phase of the alternating current signal VH', and outputs the result as a synchronous signal V2S'. The multiplier 117 multiplies the synchronous signal V2S' and the alternating current signal VH', and outputs the result as a multiplication signal VM. However, when the phase of the output signal of the amplifier 116 and the phase of the synchronous signal V2S generally coincide with each other, the phase shifter 118 may be omitted and the synchronous signal V2S may be supplied as it is to the multiplier 117 as the synchronous signal V2S'.

In the third tier of FIG. 3, a waveform example of the multiplication signal VM is illustrated. Also, superposing it, the waveform of an ideal multiplication signal VMX of a case of assuming that there is not the disturbance component VD at all is illustrated by a broken line.

The process of multiplying the alternating current signal VH' and the synchronous signal V2S' in the multiplier 117 of FIG. 2 can be considered to be execution of pattern match of the both. That is to say, the multiplication signal VM can be considered to be a result of extracting a photocurrent component having a strong correlation with the synchronous signal V2S' out of the alternating current signal VH'. At actual, as the waveform example of the multiplication signal VM illustrated in FIG. 3, when two signals having the same frequency are multiplied with each other, the multiplication result becomes a waveform similar to a squared sinusoidal wave, and a frequency component of two times of the frequency appears significantly.

This photocurrent component having a strong correlation is a photocurrent signal modulated according to the light absorbance of the reaction solution 44. Therefore, the multiplication signal VM is generally proportional to the squared result of this photocurrent signal. Accordingly, by measuring the amplitude intensity of the multiplication signal VM, the light absorbance of the reaction solution 44 can be measured. Also, even when envelope demodulation of plotting local maximum values of the multiplication signal VM is executed and the level of the envelope demodulation result is measured, the light absorbance of the reaction solution 44 can be measured.

In FIG. 2, the low-band pass filter 119 smooths the multiplication signal VM, and outputs the result as the measurement signal VL. The A/D converter 120 converts the measurement signal VL to numerical value data, and supplies the result to the computer 54 through the interface 50 (refer to FIG. 1). A waveform example of the measurement signal VL is illustrated in the fourth tier of FIG. 3. When the low-band pass filter 119 smooths the multiplication signal VM, the frequency band of the disturbance component VD is substantially removed. Therefore, the illustrated waveform of the measurement signal VL is generally the same as the waveform (not illustrated) of an ideal measurement signal of a case of assuming that there is not the disturbance component VD at all. In this manner, the signal processing circuit 111 has a function of demodulating the photocurrent signal IR according to the frequency f1 to f2 of the drive current I3, and outputting the measurement signal VL based on the demodulation result.

In the present embodiment, when the frequency of the drive current 13 is changed temporally, at the instance the frequency of the drive current 13 coincides with the frequency of the disturbance component VD, a significant difference appears between the multiplication signal VM and the ideal multiplication signal VMX. However, in the period other than that, since the effect of the disturbance component VD is dispersed, it is understood that the effect of the disturbance component VD hardly appears in the multiplication signal VM.

Also, the multiplication signal VM changing thus from the frequency f1 to f2 is supplied to the low-band pass filter 119, the multiplication signal VM including the disturbance component is integrated with a constant period of time, and thereby the influence imparted to the measurement signal VL by the disturbance component appearing instantaneously can be reduced. Further, according to the present embodiment, it is not required to check the frequency of the disturbance component VD beforehand, and the influence by the disturbance component VD under various environments can be reduced with the same circuit configuration.

Here, the cutoff frequency of the low-band pass filter 119 will be described. It is advisable to determine the cutoff frequency of the low-band pass filter 119 by the frequency of the drive current 13 and the rotation speed of the reaction disk 30 (refer to FIG. 1). In the meantime, when the wall surface 31a (refer to FIG. 2) of the reaction container 31 described above intersects the light measurement position, the noise of a square wave shape superposes the photocurrent signal IR. Therefore, it is preferable that the cutoff frequency of the low-band pass filter 119 is made such a frequency that can sufficiently suppress the influence by the noise of this square wave shape on the measurement signal VL.

However, even when a noise by the wall surface 31a superposes the measurement signal VL, this noise can be removed by various methods. For example, it is possible to arrange a detection circuit (not illustrated) that outputs a predetermined trigger signal at a time point when the light measurement position enters the light measurement region, namely a region between a pair of the wall surfaces 31a (refer to FIG. 2). By feeding back this trigger signal to the multiplication signal VM, responsiveness of smoothing in the low-band pass filter 119 can be improved. Further, it is also possible in the A/D converter 120 to effect A/D conversion originating a similar trigger signal and to execute an averaging process of the measurement signal VL by operating discrete data.

### (First Comparative Example

Next, the first comparative example will be explained.

The configuration of the first comparative example is similar to that of the first embodiment (FIG. 1, FIG. 2) described above, but is different in the point that the frequency of the alternating current voltage V2 generated by the alternating current power supply 104 is constant.

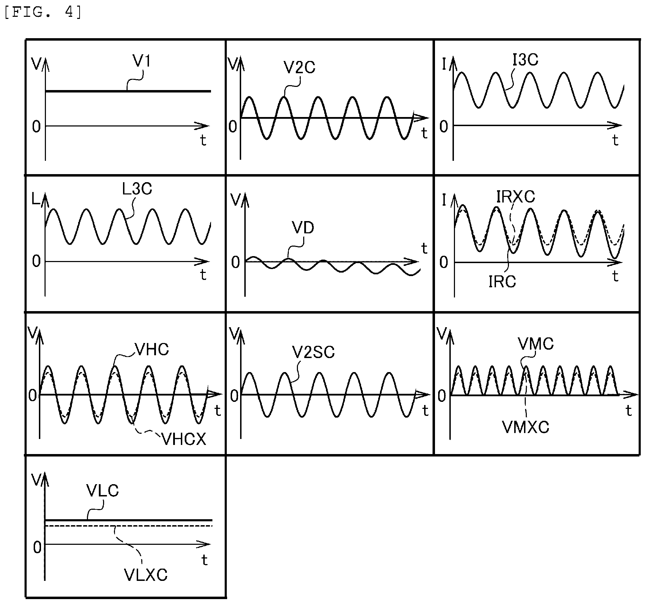

FIG. 4 is an example of the waveform diagram of each part in the first comparative example. In FIG. 4 also, similarly to FIG. 3, the horizontal axis of each graph expresses the clock time t. Also, V, I, and L of the vertical axis express the voltage, current, and intensity of the light, respectively.

In the first tier of FIG. 4, the direct current voltage V1 is similar to that illustrated in FIG. 3. Also, the alternating current voltage V2C is the alternating current voltage V2 in the present comparative example. The alternating current voltage V2C is different from the alternating current voltage V2 illustrated in FIG. 3 in terms of the waveform in a point that the frequency is constant. Also, a drive current I3C is a drive current I3C in the present comparative example, and is different from the drive current I3 illustrated in FIG. 3 in terms of the waveform again in a point that the frequency is constant.

In the second tier of FIG. 4, irradiation light L3C is the irradiation light L3 in the present comparative example. Also, the disturbance component VD is similar to that illustrated in FIG. 3. However, the frequency of the disturbance component VD is to be identical to the pulsation frequency of the irradiation light L3C in the present comparative example. Also, a photocurrent signal IRC is the photocurrent signal IR in the present comparative example, and is different from the photocurrent signal IR illustrated in FIG. 3 in terms of the waveform again in a point that the frequency is constant. Further, superposing it, a waveform of an ideal photocurrent signal IRCX in a case of assuming that there is not the disturbance component VD at all is illustrated by a broken line.

In the third tier of FIG. 4, an alternating current signal VHC is the alternating current signal VH in the present comparative example, and is different from the alternating current signal VH illustrated in FIG. 3 in terms of the waveform again in a point that the frequency is constant. Also, a synchronous signal V2SC is the synchronous signal V2S in the present comparative example. In the illustrated example, the synchronous signal V2S has a waveform identical to that of the alternating current voltage V2.

Also, a multiplication signal VMC is the multiplication signal VM in the present comparative example, and is different from the multiplication signal VM illustrated in FIG. 3 in terms of the waveform again in a point that the frequency is constant. Further, superposing each graph of the alternating current signal VHC and the multiplication signal VMC, waveforms of an ideal alternating current signal VHCX and an ideal multiplication signal VMCX in a case of assuming that there is not the disturbance component VD at all are illustrated by a broken line.

As described above, in the present comparative example, the frequency of the disturbance component VD is identical to the pulsation frequency of the irradiation light L3C. Therefore, the relation of the alternating current signal VHC and the ideal alternating current signal VHCX becomes similar in each cycle of the alternating current signal VHC. For example, in the illustrated example, the amplitude of the alternating current signal VHC is larger than the amplitude of the ideal alternating current signal VHCX in all cycles. As a result, the local maximum value of the multiplication signal VMC in each cycle becomes higher than the local maximum value of the ideal multiplication signal VMCX in all cycles.

In the fourth tier of FIG. 4, a measurement signal VLC is the measurement signal VL in the present comparative example. Also, superposing the graph of the measurement signal VLC, a waveform of an ideal measurement signal VLCX in a case of assuming that there is not the disturbance component VD at all is illustrated by a broken line. By the relation of the multiplication signal VMC and the ideal multiplication signal VMCX of the third tier described above, in the measurement signal VLC, a significant difference appears with respect to the ideal measurement signal VLCX. This difference having appeared becomes an error of the measurement signal VLC. Thus, in the first comparative example, there is a problem that a significant error occurs in the measurement signal VLC when the frequency of the disturbance component VD coincides (or comes close) with the pulsation frequency of the drive current 13C.

### [Second Embodiment]

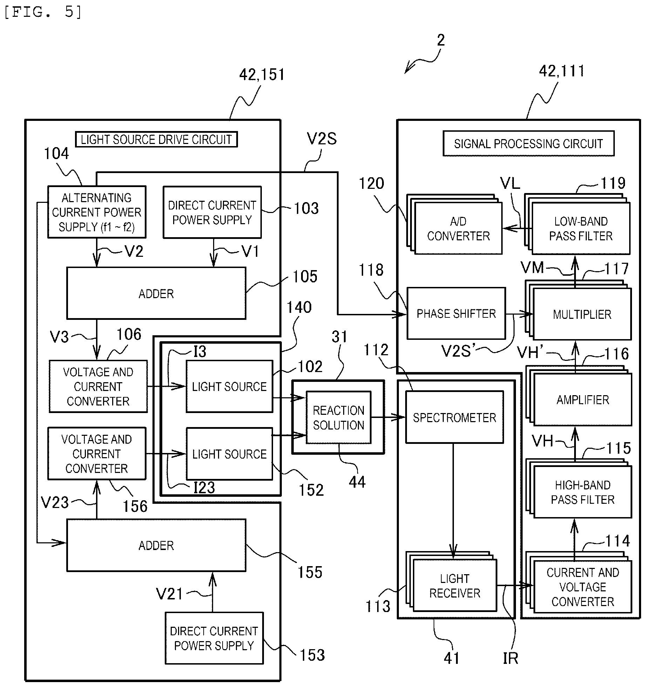

FIG. 5 is a block diagram of a main part of an automatic analyzer 2 according to the second embodiment. Also, in the explanation below, a portion corresponding to each part of the first embodiment described above is marked with the same reference sign, and there is a case of omitting explanation thereof.

The overall configuration of an automatic analyzer 2 is similar to that of the automatic analyzer 1 (refer to FIG. 1) of the first embodiment described above. However, in the present embodiment, instead of the light source drive circuit 101 and the light transmission unit 40 in the first embodiment, a light source drive circuit 151 (drive circuit) and a light transmission unit 140 illustrated in FIG. 5 are arranged.

The light transmission unit 140 includes another light source (second light source) 152 in addition to the light source 102 described above. It is preferable that the light source 102 and the light source 152 are applied which are different from each other such that they have different wavelength distributions of the irradiation light. Thus, it is possible to acquire a measurement result in a broader wavelength band. Also, the light source drive circuit 151 includes a direct current power supply 153, an adder 155, and a voltage and current converter 156 in addition to the configuration elements 103 to 106 similar to the light source drive circuit 101 (refer to FIG. 2) of the first embodiment.

The direct current power supply 153 outputs direct current voltage V21. The adder 155 synthesizes the direct current voltage V21 and the alternating current voltage V2, and outputs pulsating current voltage V23 that is the result of it. The voltage and current converter 156 supplies a drive current 123 (the second drive current) which is a pulsating current having a magnitude proportional to the pulsating current voltage V23 to the light source 152. Thus, the light source 152 generates an irradiation light where the intensity and frequency change temporally, similarly to the light source 102. According to the configuration described above, both of the light sources 102 and 152 emit light with a temporal change of the same frequency based on the alternating current voltage V2.

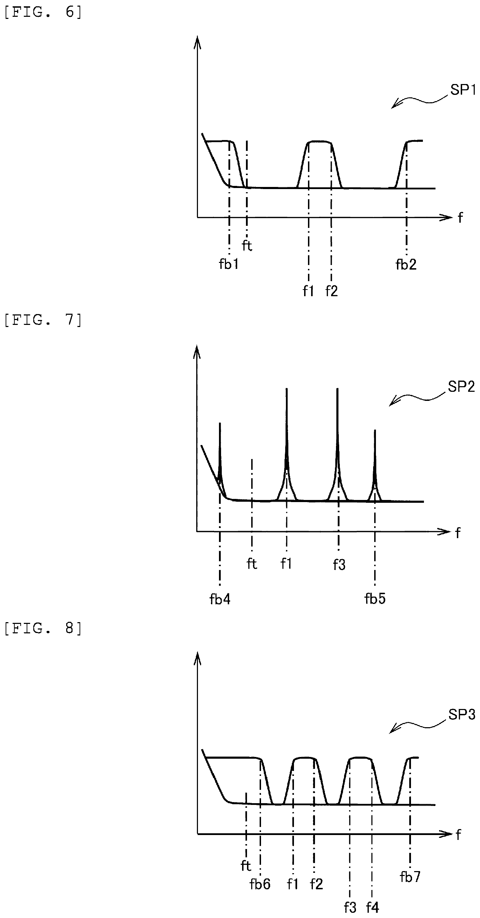

Fig. 6 is a diagram showing a frequency spectrum SP1 appearing in the photocurrent signal IR according to the second embodiment.

When the alternating current voltage V2 changes within the range of the frequency f1 to f2, in the frequency spectrum SP1, a frequency component such as beat frequencies fb1, fb2 is generated. Here, the beat frequencies fb1, fb2 are values satisfying "fb1=f2-f1, fb2=f1+f2".

However, as is illustrated, the beat frequencies fb1, fb2 are sufficiently apart from the frequencies f1, f2. Therefore, when the cutoff frequency ft of the high-band pass filter 115 is set as the illustration for example, the component of the beat frequency fb1 can be removed from the alternating current voltage VH. Also, the component of the beat frequency fb2 is low in terms of the correlation with respect to the frequency f1 to f2 of the synchronous signal V2S (refer to FIG. 5). Therefore, the component in question can be reduced sufficiently by the pattern match in the multiplier 117 and the smoothing process by the low-band pass filter 119.

In the present embodiment, the light sources 102 and 152 (refer to FIG. 5) emit light accompanying a temporal change of the same frequency as each other. Therefore, in the photocurrent signal by each transmission light having been emitted from respective light sources 102 and 152 and having transmitted the reaction solution 44, a component of the frequency difference based on the beat phenomenon hardly appears. Also, the photocurrent signal based on the transmission light of the both can acquire the measurement signal VL using common high-band pass filter 115, adder 117, low-band pass filter 119, and the like since a temporal change of the same frequency appears.

From the viewpoint of "equalizing the frequency" of the drive current supplied to the light sources 102 and 152, it is also possible, for example, to add further an alternating current power supply that is of the same kind as the alternating current power supply 104 and to supply the alternating current voltage outputted by each to the adders 105 and 155 respectively. However, when plural alternating current power supplies of the same kind are applied, there occurs a problem that frequency difference occurs slightly by dispersion during the manufacturing process, a use condition, and the like. Therefore, as is done in the present embodiment, when the common alternating current voltage V2 outputted by one set of the alternating current power supply 104 is supplied to both of the adders 105 and 155, it is considered to be preferable in a point that such kind of problem can be avoided. As described above, according to the present embodiment, the influence by the beat phenomenon can be sufficiently suppressed while acquiring the measurement result in a broad wavelength band using the plural light sources 102 and 152, and measurement of the intensity of the light can be achieved easily.

### [Second Comparative Example]

Next, the second comparative example will be explained.

Although illustration will be omitted with respect to the configuration of the second comparative example, in the second comparative example, the light transmission unit 140 (refer to FIG. 5) similar to that of the second embodiment is applied. Also, a drive current of a pulsating current whose pulsation frequency is fixed to f1 is supplied to the light source 102. Further, a drive current of a pulsating current whose pulsation frequency is fixed to f3 (wherein f1<f3) is supplied to the light source 152. The configuration of the second comparative example other than those described above is similar to that of the second embodiment (refer to FIG. 1 and FIG. 5).

FIG. 7 is a diagram showing a frequency spectrum SP2 appearing in the photocurrent signal IR according to the second comparative example.

Since the pulsation frequency of the drive current supplied to the light source 102 is f1 and the pulsation frequency of the drive current supplied to the light source 152 is f3, in the frequency spectrum SP2, frequency components of the beat frequencies fb4, fb5, and the like are generated. Here, the beat frequencies fb4, fb5 are values satisfying "fb4=f3-f1, fb5=f1+f3".

As illustrated in FIG. 7, the beat frequencies fb4 and fb5 are sufficiently apart from the frequencies f1 and f3. Therefore, similarly to the second embodiment described above, the component of the beat frequencies fb4 and fb5 can be removed from the alternating current signal VH or the multiplication signal VM. However, when the frequency of the disturbance VD (refer to the second tier of FIG. 4) coincides with the frequency f1 or f3, similarly to the first comparative example described above, such problem occurs that an error is mixed in to the measurement signal VL.

### [Third Comparative Example]

Next, the third comparative example will be explained.

Although illustration will be omitted with respect to the configuration of the third comparative example, in the third comparative example, the light transmission unit 140 (refer to FIG. 5) similar to that of the second embodiment is applied. Also, similarly to the second embodiment described above, a drive current whose pulsation frequency changes within the range of f1 to f2 is supplied to the light source 102. On the other hand, a drive current whose pulsation frequency changes within the range of f3 to f4 (wherein f1<f2<f3<f4) is supplied to the light source 152. The configuration of the third comparative example other than those described above is similar to that of the second embodiment (refer to FIG. 1 and FIG. 5).

FIG. 8 is a diagram showing a frequency spectrum SP3 appearing in the photocurrent signal IR according to the third comparative example.

In the third comparative example, beat frequency components are generated over a broad band based on the mutual relation of the frequencies f1, f2, f3, f4. In particular, beat frequencies fb6. Fb7 in the diagram are values satisfying "fb6=f4-f1, fb7=f1+f2" for example, and come close to the range of the frequency f1 to f4.

Therefore, in this third comparative example, when the cutoff frequency ft of the high-band pass filter 115 is set as illustrated, the beat frequency component cannot be reduced sufficiently, and an error by the beat phenomenon becomes large in the measurement signal VL. Also, when the cutoff frequency ft of the high-band pass filter 115 is made higher than the beat frequency fb6, in the high-band pass filter 115, the component in the vicinity of the frequency f1 also comes to be attenuated, and an error in the measurement signal VL becomes large again.

Also, in the present comparative example, since the drive current having different frequency is supplied to the light sources 102 and 152, it is needed to arrange a power supply equivalent to the alternating current power supply 104 for each frequency. Also, with respect to the light receiver 41 or the signal processing circuit 111 (refer to FIG. 5), units for separating these frequencies are needed. Therefore, in the present comparative example, such problems also occur that the configuration of the apparatus becomes complicated and the cost increases.

### [Third Embodiment]

Next, an automatic analyzer according to the third embodiment will be explained. Also, in the explanation below, a portion corresponding to each part of other embodiments described above is marked with the same reference sign, and there is a case of omitting explanation thereof.

The configuration of the automatic analyzer according to the third embodiment is similar to that of the automatic analyzer 1 (refer to FIG. 1 and FIG. 2) of the first embodiment or the automatic analyzer 2 (refer to FIG. 5) of the second embodiment described above. However, although the direct current voltage V1, V21 outputted by the direct current power supplies 103, 153 were of constant values in the first and second embodiments described above, the present embodiment differs in a point that the direct current voltage V1, V21 are changed in the direct current power supplies 103, 153.

That is to say, with respect to the direct current power supplies 103, 153 in the present embodiment, at the timing of starting energization of the light sources 102, 152, the direct current voltages V1, V21 are set to the first level that is comparatively high. Thereafter, as the energization time for the light sources 102, 152 elapses, the level of the direct current voltages V1, V21 is lowered gradually, and when the energization time reaches a predetermined time, the direct current voltages V1, V21 are set to the second level that is lower than the first level.

Here, the purpose for changing the direct current voltages V1, V21 in the manner described above will be explained. In order to extend the life of the light sources 102, 152, it is preferable to make the direct current component of the drive currents 13, I23 as small as possible within a range of securing an intended light emission characteristic. However, when the direct current component is suppressed, a long time is required until the temperature of the light sources 102, 152 reaches a constant temperature. The light emission characteristic of the light sources 102, 152 is affected by the element temperature of them. Therefore, when the direct current component of the drive currents I3, I23 is suppressed simply, there occurs a problem that a long time is required until the light emission characteristic of the light sources 102, 152 is stabilized.

According to the present embodiment, at the timing of starting energization of the light sources 102, 152, in order to enlarge the direct current component of the drive currents I3, I23, the temperature of the light sources 102, 152 can be raised quickly to the vicinity of the constant temperature described above. Also, the level of the direct current component is thereafter lowered gradually, and when the energization time reaches a predetermined period of time, the direct current component is suppressed to a magnitude corresponding to the second level. Thus, according to the present embodiment, the light emission characteristic of the light sources 102, 152 can be stabilized quickly, and the life of the light sources 102, 152 can be extended.

### [Effects of Embodiments]

According to the embodiment described above, the automatic analyzer 1 includes the first light source (102) configured to emit light toward the sample (44), the drive circuit (101) configured to supply the first drive current (I3) whose frequency (f1 to f2) changes intermittently or continuously to the first light source (102), the light receiver 113 configured to output the light detection signal (IR) based on light transmitted through the sample (44), and the signal processing circuit 111 configured to demodulate the light detection signal (IR) in accordance with the frequency (f1 to f2) of the first drive current (I3) and output the measurement signal VL based on a demodulation result.

Also, in another viewpoint, the embodiment is an automatic analysis method including a process of emitting light to the sample (44) from the first light source (102) by supplying the first drive current (I3) whose frequency (f1 to f2) changes intermittently or continuously to the first light source (102), a process of outputting the light detection signal (IR) based on light transmitted through the sample (44), and a process of demodulating the light detection signal (IR) in accordance with the frequency (f1 to f2) of the first drive current (I3) and outputting the measurement signal VL based on a demodulation result. Thus, according to the embodiment, even when the disturbance component VD is mixed in to the light detection signal (IR), the influence by disturbance component VD can be appropriately suppressed in the measurement signal VL.

Also, it is preferable that the automatic analyzer 2 further includes the second light source (152) different from the first light source (102) and configured to emit light toward the sample (44), and the drive circuit (151) supplies the second drive current (I23) having the same frequency (f1 to f2) as the first drive current (I3) to the second light source (152). Thus, the influence by the beat phenomenon can be appropriately suppressed while acquiring the measurement result in a broad wavelength band using plural light sources.

Also, it is more preferable that the first drive current (I3) is a pulsating current including a direct current component and an alternating current component, the drive circuit (101) includes: the direct current component control unit (103) configured to control the direct current component; and the alternating current component control unit (104) configured to control the alternating current component, the signal processing circuit (111) includes the high-band pass filter 115 configured to attenuate a component, among frequency components of the light detection signal (IR), equal to or lower than a cutoff frequency ft that is lower than the lowest frequency (f1) of the alternating current component, and the direct current component control unit (103) has a function of reducing the direct current component with an elapse of an energization time for the first light source (102). Thus, it is possible to quickly heat the first light source (102) to quickly stabilize the light emission characteristic, and it is thereafter possible to suppress the electric current supplied to the first light source (102) to elongate the life of the first light source (102).

### [Modification Example]

The present invention is not limited to the embodiments described above, and various modifications are possible. The embodiments described above were exemplified to explain the present invention for easy understanding, and is not to be necessarily limited to one including all configurations explained. Also, a part of a configuration of an embodiment can be replaced by a configuration of another embodiment, and a configuration of an embodiment can be added with a configuration of another embodiment. Further, a part of a configuration of each embodiment can be deleted, or added with or replaced by another configuration. Also, with respect to the control line and the information line shown in the diagrams, those considered to be required for explanation have been shown, and all control lines and information lines required for the product have not necessarily been shown. In fact, almost all configurations can be considered to be mutually connected. With respect to a modification possible for the embodiments described above, the following can be cited for example.

(1) In each embodiment described above, as an example of the sample, an example of applying the reaction solution 44 was explained. However, the sample is not limited to the reaction solution 44, and may be various solids, liquids, or gasses.

### Reference Sign List

1, 2 automatic analyzer
44 reaction solution (sample)
101, 151 light source drive circuit (drive circuit)
102 light source (first light source)
103 direct current power supply (direct current component control unit)
104 alternating current power supply (alternating current component control unit)
111 signal processing circuit
113 light receiver
115 high-band pass filter
152 light source (second light source)
I3 drive current (first drive current)
IR photocurrent signal (light detection signal)
VL measurement signal
f1 frequency (lowest frequency)
f2, f3, f4 frequency
ft cutoff frequency
I23 drive current (second drive current)

## Claims

1. An automatic analyzer, comprising:
a first light source configured to emit light toward a sample;
a drive circuit configured to supply a first drive current whose frequency changes intermittently or continuously to the first light source;
a light receiver configured to output a light detection signal based on light transmitted through the sample; and
a signal processing circuit configured to demodulate the light detection signal in accordance with the frequency of the first drive current and output a measurement signal based on a demodulation result.

2. The automatic analyzer according to claim 1, further comprising:
a second light source different from the first light source and configured to emit light toward the sample, wherein
the drive circuit supplies a second drive current having the same frequency as the first drive current to the second light source.

3. The automatic analyzer according to claim 1, wherein
the first drive current is a pulsating current including a direct current component and an alternating current component,
the drive circuit includes a direct current component control unit configured to control the direct current component, and an alternating current component control unit configured to control the alternating current component,
the signal processing circuit includes a high-band pass filter configured to attenuate a component, among frequency components of the light detection signal, equal to or lower than a cutoff frequency that is lower than the lowest frequency of the alternating current component, and
the direct current component control unit has a function of reducing the direct current component with an elapse of an energization time for the first light source.

4. An automatic analysis method, comprising:
a process of emitting light to a sample from a first light source by supplying a first drive current whose frequency changes intermittently or continuously to the first light source;
a process of outputting a light detection signal based on light transmitted through the sample; and
a process of demodulating the light detection signal in accordance with a frequency of the first drive current and outputting a measurement signal based on a demodulation result.
